# EUROPEAN PATENT APPLICATION

(11) **EP 2 196 770 A2**
(43) Date of publication of application: **16.06.2010**
(21) Application number: 09178567.5
(22) Date of filing: 09.12.2009
(51) Int. Cl.: G01C 21/20, G01C 21/36, G06F 17/30, G09B 29/10

(54) **Method and Device for Searching Contents**

(30) Priority: 10.12.2008 KR 20080124971
(71) Applicant: SAMSUNG ELECTRONICS CO., LTD., Suwon-si, Gyeonggi-do (KR)
(72) Inventor: Yang, Gyung Hye, Gyeonggi-do (KR); Jeon, Jin Young, Gyeonggi-do (KR); Hwang, Sang Woong, Gyeonggi-do (KR); Kwahk, Ji Young, Gyeonggi-do (KR); Her, Jee Young, Gyeonggi-do (KR); Yang, Ji Sun, Gyeonggi-do (KR)
(74) Representative: Jenkins, Richard Gavin

(57) **Abstract**

Disclosed are a method and a device for searching contents by using time information or spatial information. The device for contents search includes a memory unit configured to store contents having spatial information and time information as search information and to further store groups into which the contents are classified by the spatial information or the time information. The device further includes a display unit configured to display a time information search tool and a spatial information search tool in response to receipt of a request for a contents search is received, and to further display the contents belonging to a searched group. Also the device includes an input unit configured to receive an input of search information and a control unit configured to search a group having the selected search information.

## Description

### BACKGROUND OF THE INVENTION

### FIELD OF THE INVENTION

Exemplary embodiments of the present invention relate to a content search technique and, more particularly, to a method and a device for searching contents by using time information or spatial information.

### DISCUSSION OF THE BACKGROUND

Advanced electronic devices today have the capability to process various types of data and to store great volumes of data. A user, therefore, often may want to make a quick and exact search for desired data from various and voluminous data stored in electronic devices. Additionally, a user often may want such devices to offer an easier, more convenient, more user-friendly interface for data search.

An electronic device usually stores contents as data in a hierarchical structure of folders when such contents are created. So, a user who desires to find something in stored contents may input a name of a desired content or a folder name related to a desired content, and then the electronic device performs a search for a user's desired content by using an inputted content name or folder name.

A user may, however, often remember contents by their time information (e.g., a specific point of time) or spatial information (e.g., a specific location) rather than by their names or folder names. In such case, a user fails to know a name of a desired content or a related folder name, so he or she has to examine hierarchically structured folders one by one to find a desired content. Unfortunately, this may inconvenience a user searching for content. Moreover, such inconvenience will increase as the number of contents stored in an electronic device rises.

Accordingly, required is a user-oriented, user-friendly content search technique that compliments user's memory.

### SUMMARY OF THE INVENTION

Exemplary embodiments of the present invention provide a method for searching contents in an electronic device, the method including offering a time information search tool and a spatial information search tool in response to receipt of a request for a contents search, receiving input of search information including at least one of time information and spatial information through either or both of the time information search tool and the spatial information search tool, and searching for at least one content including the search information among a plurality of contents stored in the device.

Exemplary embodiments of the present invention also provide an electronic device for contents search, the device including a memory unit configured to store a plurality of contents having spatial information and time information as search information, and to further store groups into which the plurality of contents are classified by the spatial information or the time information, a display unit configured to display a time information search tool and a spatial information search tool in response to receipt of a request for a contents search, and to further display the contents belonging to a searched group, an input unit configured to receive an input of search information including at least one of time information and spatial information through either or both of the time information search tool and the spatial information search tool, and a control unit configured to search a group including the search information.

Additional features of the invention will be set forth in the description which follows, and in part will be apparent from the description, or may be learned by practice of the invention.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.

FIG. 1 is a block diagram that illustrates a schematic configuration of an electronic device for content search in accordance with an exemplary embodiment of the present invention.

FIG. 2 is a block diagram that illustrates a schematic configuration of a system having an electronic device for content search in accordance with another exemplary embodiment of the present invention.

FIG. 3A is a screen view that illustrates a time information search tool and a spatial information search tool for content search in accordance with an exemplary embodiment of the present invention.

FIG. 3B is an enlarged view of the time information search tool shown in FIG. 3A.

FIG. 3C is an enlarged view of the spatial information search tool shown in FIG. 3A.

FIG. 4A and FIG. 4B are screen views that illustrate a process of searching contents by using time information in accordance with an exemplary embodiment of the present invention.

FIG. 4C is a screen view that illustrates a process of searching contents by using time information in accordance with another exemplary embodiment of the present invention.

FIG. 5A and FIG. 5B are screen views that illustrate a process of searching contents by using spatial information in accordance with an exemplary embodiment of the present invention.

FIG. 6 is a flow diagram that illustrates a process of searching contents by using time information or spatial information in accordance with an exemplary embodiment of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

The principles and features of this invention may be used in varied and numerous embodiments without departing from the scope of the invention. Furthermore, well known or widely used techniques, elements, structures, and processes may not be described or illustrated in detail to avoid obscuring the essence of the present invention.

Exemplary embodiments of the present invention provide a technique to allow a quick search for user's desired content through time information or spatial information and to allow a user-oriented search based on a user's memory of a specific point of time or a specific location in connection with desired content.

Among terminologies set forth herein, 'content' or 'contents' refer to all kinds of data, such as text, symbol, audio, sound, image, and video, represented in a form suitable for processing by electronic devices.

Additionally, a 'time information search tool' refers to means of searching contents by using time information, namely, all kinds of means allowing a data search depending on time information.

Similarly, a 'spatial information search tool' refers to means of searching data by using spatial information, namely, all kinds of means allowing a data search depending on spatial information.

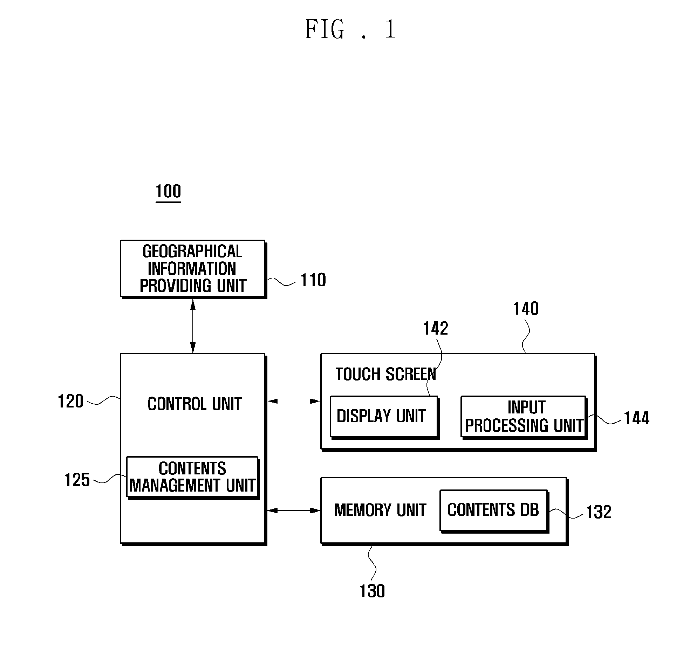

FIG. 1 is a block diagram that illustrates a schematic configuration of an electronic device for content search in accordance with an exemplary embodiment of the present invention. Elements of the device shown in FIG. 1 are exemplary only. Although not illustrated, any other elements may be included in the exemplary embodiments of the present invention. For example, hardware and/or software elements required for creation and execution of contents may be added to the device. If the device is a mobile communication device, a radio frequency (RF) unit and a related data processing unit may be further used.

Referring to FIG. 1, the device 100 includes a geographical information providing unit 110, a control unit 120, a memory unit 130, and a touch screen 140.

Specifically, the geographical information providing unit 110 supplies geographical information related to content. That is, the geographical information providing unit 110 acquires geographical information about a location of the device 100 and then attaches spatial information to content when the content is created. In one exemplary embodiment, the geographical information providing unit 110 may be a global positioning system (GPS) module, which receives information from GPS satellites and then acquires geographical information about the location of the device 100 by using the received information. The geographical information providing unit 110, however, is not limited to the GPS module, and any other equivalents may be used alternatively or additionally.

The control unit 120 controls the operation of the device 100 and controls the flow of signals between blocks in the device 100. Particularly, the control unit 120 performs a search process to find target content, which corresponds to a user's input by the time information search tool or the spatial information search tool, from contents having time information and spatial information. To execute the above function, the control unit 120 may have a contents management unit 125, which receives a user's input through the time information search tool or the spatial information search tool, performs a search process for contents, and offers a search result to a user in a display format.

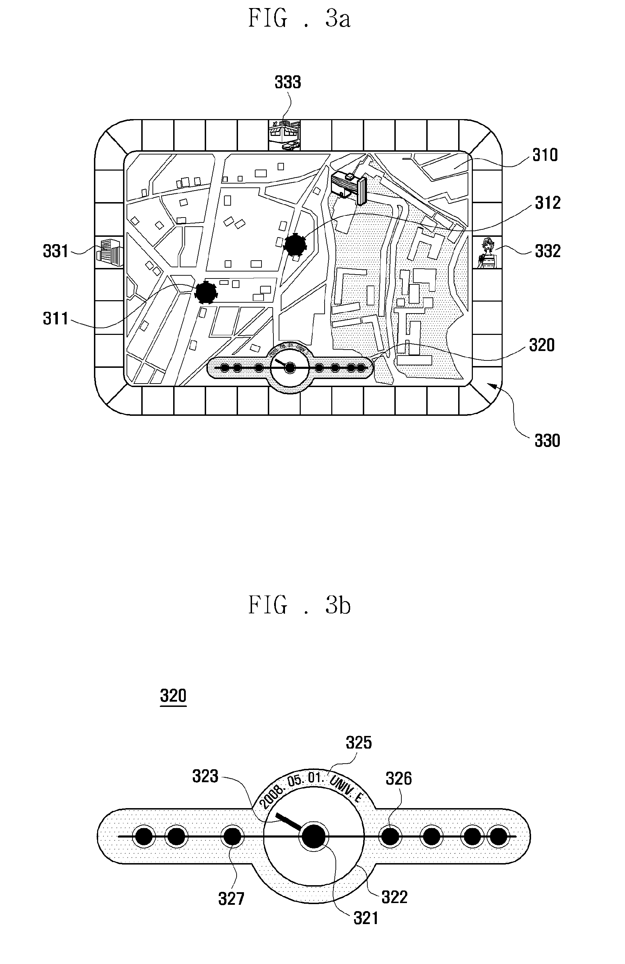

One example of the display format is to display contents, obtained by a search based on a time information input, in a specific area (e.g., a display band 330 in FIG. 3A) of a display unit 142 in the order of time or in arbitrary order. Another example of the display format is to display contents, obtained by a search based on a spatial information input, in a particular manner (e.g., marks 311 and 312 in FIG. 3A) on a map provided by the display unit 142. Yet another example of the display format is to highlight contents obtained by a space-based search among contents displayed in the above specific area by a time-based search. Such display formats will be described again later.

The memory unit 130 stores programs and data required for performing functions of the device 100. Additionally, the memory unit 130 stores mapping data (e.g., address data) required to map an address of a location (e.g., by a national address system) that corresponds to geographical information (e.g., latitude and longitude) obtained by the geographical information providing unit 110.

For contents, the memory unit 130 may store, as spatial information, geographical information received from the geographical information providing unit 110 or the entire address corresponding to mapped geographical information. For groups of contents, the memory unit 130 may store a partial address as spatial information. Here, geographical information or an address for contents may be stored in a contents database 132 included in the memory unit 130 in order to store contents.

In a case of an address system, such as, for example, that of the United States, that uses Address Number, Address Name, City and State, an address of a location 'XXX Address A, City B, State C' may be obtained for example by mapping address data based on geographical information. In this case, metadata of contents may contain geographical information such as latitude and longitude or contain the entire address 'XXX Address A, City B, State C'. Also, spatial information of a group of the above contents may be just 'Address A' or 'State C'.

In another case of an address system, such as, for example, that of Korea, that usually uses City, Gu, Dong and Address Number, an address of a location 'A-City B-Gu C-Dong XXX' may be obtained for example by mapping address data based on geographical information. In this case, metadata of contents may contain geographical information or the entire address 'A-City B-Gu C-Dong XXX'. Also, spatial information of a group of the above contents may be just 'B-Gu' or 'C-Dong'.

Alternatively, a specific location data designated by a user or a keyword frequently used for searching a location may replace or be used in addition to a mapped address as spatial information of groups of contents. For example, an address corresponding to geographical information may be 'Address A'. However, if a user designates 'Building D' for 'Address A' or if 'Building D' is frequently used as a keyword for searching 'Address A', spatial information of groups may be not 'Address A' but 'Building D'.

The touch screen 140 includes a display unit 142 and an input processing unit 144. That is, the touch screen 140 is a unit that can be used as both a display unit and an input unit. The touch screen 140 receives an input signal by sensing a user's touch activity with a user's body (e.g., finger) or an implement such as a stylus pen on the surface of the display unit 142 instead of a conventional key press input.

The display unit 142 provides on a screen a variety of data related to the execution of functions in the device 100. The display unit 142 may be formed, for example, of a liquid crystal display (LCD). In the case of an LCD display, the display unit 142 may be composed of an LCD controller, a memory, and an LCD unit, as well known in the art.

The input processing unit 144 is disposed on the display unit 142. The input processing unit 144 has a sensor that receives a user's touch input with a user's body (e.g., finger) or an implement such as a stylus pen and then creates a signal corresponding to the received input. Specifically, the input processing unit 144 may include a touch sensing module (not shown) and a signal converting module (not shown). When an input event happens to the touch screen 140 by a user's touch manipulation, the touch sensing module detects a change in a physical parameter (e.g., resistance, capacitance, etc.) and therefore senses the occurrence of an input event. The signal converting module converts a change in a physical parameter caused by an input event into a digital signal. The input event may be a touch-down, a touch-up, a drag, a flick, a multi-touch, etc. In order to detect a multi-touch input event, the input processing unit 144 may have a plurality of sensors arranged in a matrix form.

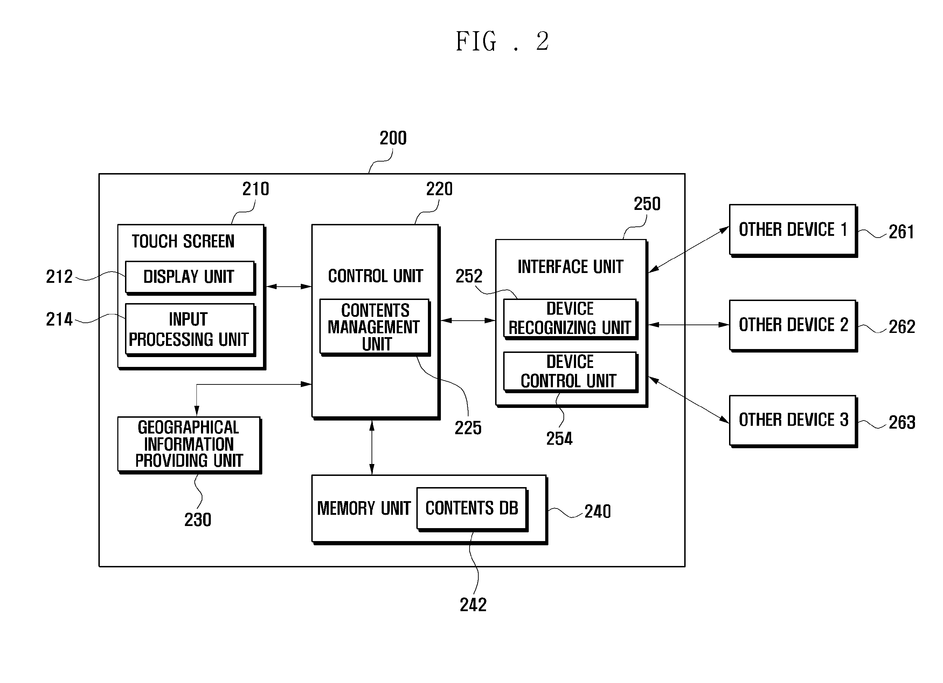

FIG. 2 is a block diagram that illustrates a schematic configuration of a system having an electronic device for content search in accordance with another exemplary embodiment of the present invention. The device 200 shown in FIG. 2, together with other devices or apparatuses connected thereto, constitutes a system for content search. The device 200 may be the same device as shown in FIG. 1, and further have any other elements not illustrated.

Referring to FIG. 2, the device 200 includes a touch screen 210, a control unit 220, a geographical information providing unit 230, a memory unit 240, and an interface unit 250. The device 200 may be connected through the interface unit 250 to other devices, apparatuses, servers or any other equivalents, which provide contents. Although the device 200 shown in FIG. 2 is connected to three devices 261, 262 and 263, this is exemplary only and not to be considered as a limitation of the present invention. In order to clearly distinguish the device 200 from other devices 261, 262 and 263, the latter devices 261, 262 and 263 will be hereinafter referred to as contents providing devices 261, 262, and 263.

As discussed above with reference to FIG. 1, the touch screen 210 includes a display unit 212 and an input processing unit 214. The display unit 212 provides on a screen data related to the execution of functions in the device 200, and may be formed, for example, of an LCD composed of an LCD controller, a memory, and an LCD unit. The input processing unit 214 is disposed on the display unit 212, and has a sensor that receives a user's touch input with a user's body (e.g., finger) or an implement such as a stylus pen and then creates a signal corresponding to the received input. In order to detect a multi-touch input event, the input processing unit 214 may have a plurality of sensors arranged in a matrix form.

The control unit 220 controls the operation of the device 200 and controls the flow of signals between blocks in the device 200. The control unit 220 may have a contents management unit 225, which receives a user's input through the time information search tool or the spatial information search tool, performs a search process for contents, and offers a search result to a user in a display format. In addition, if the contents providing devices 261, 262 and 263 are connected to the device 200, the contents management unit 225 examines time information and spatial information about contents stored in the contents providing devices 261, 262 and 263. Then, based on time information or spatial information, the contents management unit 225 groups all contents in both the device 200 and the contents providing devices 261, 262 and 263, and thus reorganizes groups of contents. Such reorganization may be performed at the request of a contents search, at the connection of the contents providing device, or at any other time.

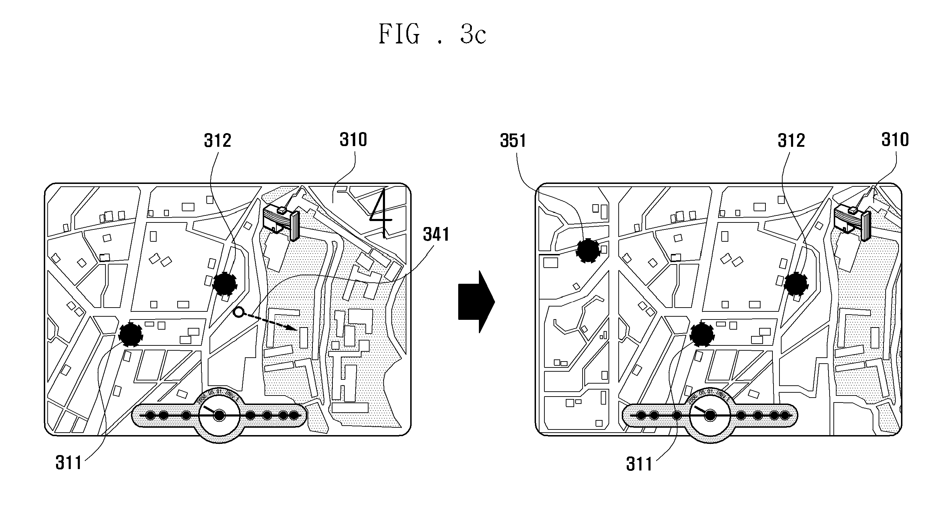

In a content search, the contents management unit 225 groups all contents by time information or spatial information, selects a specific group corresponding to a user's input by the time information search tool or the spatial information search tool, and retrieves contents contained in the selected group. Then the retrieved contents are offered as a search result to a user. Here, contents searched by time information, contents searched by spatial information, and contents searched by both time information and spatial information may be displayed in different display formats. This will be described in detail with reference to FIG. 3A, FIG. 3B, and FIG. 3C.

The geographical information providing unit 230 obtains geographical information about the device 200 when contents are created or played, and then offers the obtained geographical information to the control unit 220 to add spatial information to contents. The geographical information providing unit 230 may be a GPS module, which receives information from GPS satellites and then obtains geographical information about the device 200 by using the received information. The geographical information providing unit 230, however, is not limited to the GPS module, and any other equivalents may be used alternatively or additionally.

The memory unit 240 stores programs and data required for performing functions of the device 200. Additionally, the memory unit 240 stores mapping data (e.g., address data) required to map an address of a location (e.g., by a national address system) that corresponds to geographical information (e.g., latitude and longitude) obtained by the geographical information providing unit 230. For contents, the memory unit 240 may store, as spatial information, geographical information received from the geographical information providing unit 230 or the entire address corresponding to mapped geographical information. For groups of contents, the memory unit 240 may store a partial address as spatial information. Here, geographical information or an address for contents may be stored in a contents database 242 included in the memory unit 240 in order to store contents.

The interface unit 250 controls the connection between the device 200 and the contents providing devices 261, 262 and 263. For this, the interface unit 250 may have a device recognizing unit 252, which determines whether the contents providing devices are connected to the device 200, and a device control unit 254, which controls the contents providing devices after the connection thereof.

FIG. 3A is a screen view that illustrates a time information search tool and a spatial information search tool for content search in accordance with an exemplary embodiment of the present invention.

Referring to FIG. 3A, the display unit 142 shown in FIG. 1 or 212 shown in FIG. 2 displays a map 310 to be used as a spatial information search tool and a search bar 320 to be used as a time information search tool. A user can perform a content search based on spatial information by moving a location on the map 310. Also, a user can perform a contents search based on time information by rotating a selection bar in the search bar 320. The selection bar can have a shape of a jog shuttle bar. This will be described in detail below.

Contents searched by a time information input are arranged in the order of time and displayed in a display band 330 disposed along the edge of a screen. Among these contents in the display band 330, specific contents 331, 332 and 333 selected by a spatial information input are highlighted. Additionally, groups of contents searched by a spatial information input are displayed in the form of particular marks 311 and 312 at their locations on the map 310. Contents in the selected group may be activated and actually displayed in response to selection by a touch input of one of marks 311 and 312.

The map 310, the search bar 320, the display band 330, and the display formats for searched contents are exemplary only and not to be considered as a limitation of the present invention.

FIG. 3B is an enlarged view of the time information search tool shown in FIG. 3A.

Referring to FIG. 3B, the search bar 320 (i.e., the time information search tool) arranges, in chronological order, groups of contents stored in the device and classified by their time information, and offers them to a user. The groups of contents may be displayed in the form of circular icons as indicated by reference numbers 321, 326 and 327. A group selected by a user is disposed in an enlarged circle 322, and information about the selected group is displayed in an outer circle 325 around the enlarged circle 322. A user can select a group having desired time information by rotating a selection bar 323 extending from the circular icon 321 in the enlarged circle 322.

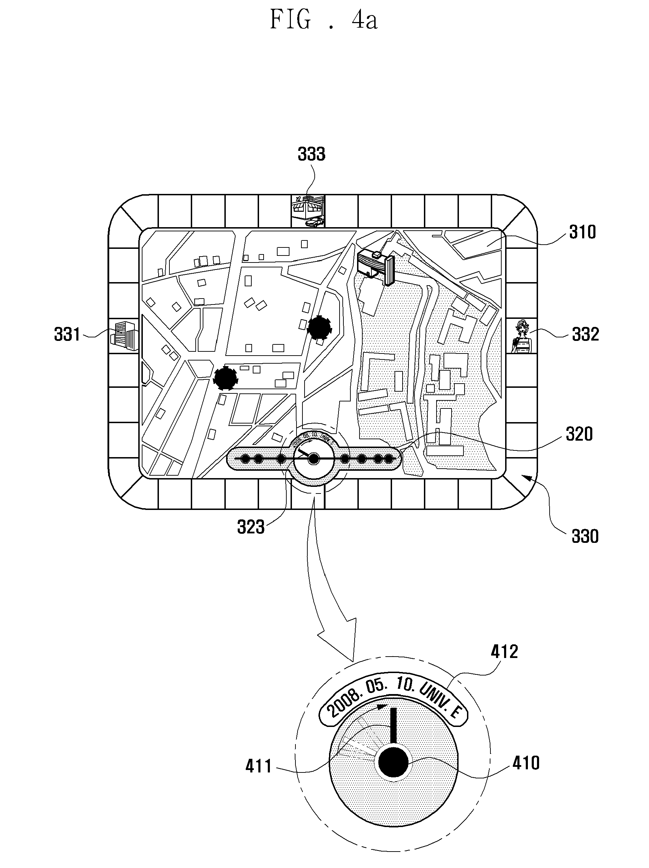

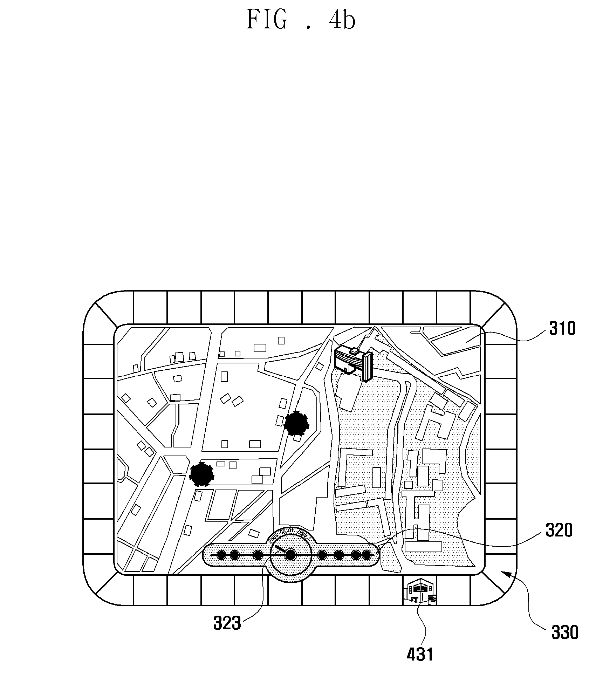

FIG. 3A shows an example where a group having '2008.05.01' as time information is selected. Here, since the selected group has 'Univ. E' as spatial information, the map 310 represents a certain region that includes 'Univ. E'. If a user rotates counterclockwise the selection bar 323, time information before the selected time information '2008.05.01' is searched. If a user rotates clockwise the selection bar 323, time information after the selected time information '2008.05.01' is searched. A content search by using the time information search tool will be described in detail later with reference to FIG. 4A and FIG. 4B.

A region displayed on the map 310 is not changed while the selection bar 323 is being rotated for a search by time information. After the rotation of the selection bar 323 is completed, a newly selected group 321 corresponding to changed time information is disposed in the enlarged circle 322 and its time and spatial information is displayed in the outer circle 325. At this time, a region on the map 310 is changed according to corresponding spatial information. Although all groups of contents have preferably both time information and spatial information, some groups may have either time information or spatial information. Groups having time information only may be displayed in the search bar 320.

Time information and spatial information about contents are included in metadata of contents. If any group has contents having time information only in their metadata, the group has time information only. As discussed, the rotation of the selection bar 323 in the search bar 320 may allow a content search by spatial information as well as by time information. However, a contents search by spatial information can be more intuitively performed using the spatial information search tool.

FIG. 3C is an enlarged view of the spatial information search tool shown in FIG. 3A.

Referring to FIG. 3C, when a certain group is selected in the search bar 320 shown in FIG. 3B, the display unit displays the map 310 as the spatial information search tool, which contains a region corresponding to spatial information about the selected group. Here, the extent of a region displayed in the map 310 or the reduced scale of the map 310 may be defined and varied by a user.

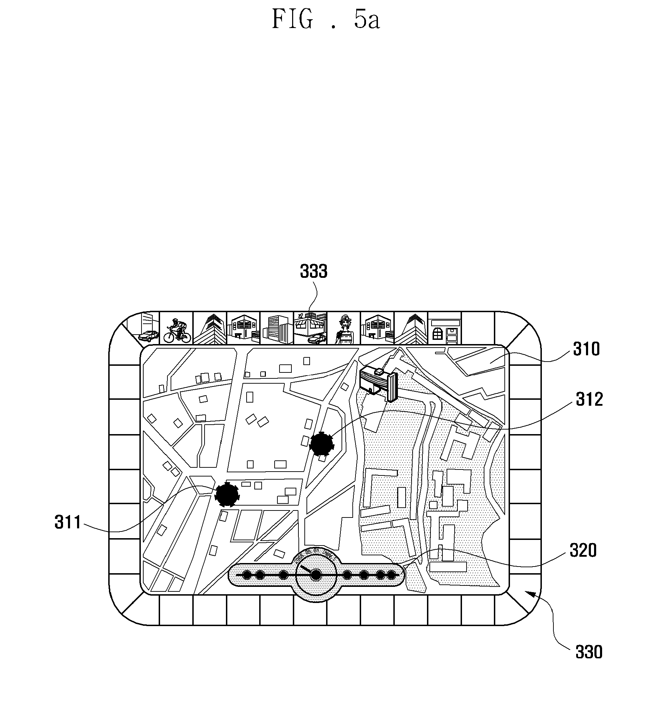

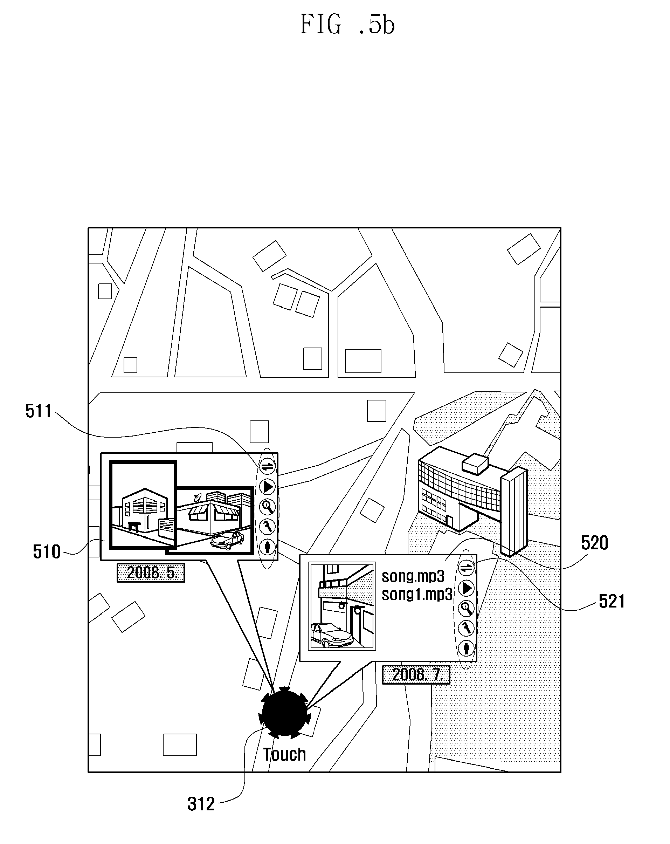

If a drag 341 happens as an input event from a specific location on the map 310, the display unit moves the map 310 by changing a direction and a distance according to the drag 341. The map 310 contains particular marks 311, 312 and 351, each of which represents a group having spatial information corresponding to a certain region in the map 310. Contents in the selected group may be activated and actually displayed in response to selection by a touch input of one of marks 311, 312, and 351. This will be described in detail later with reference to FIG. 5A and FIG. 5B.

FIG. 4A and FIG. 4B are screen views that illustrate a process of searching contents by using time information in accordance with an exemplary embodiment of the present invention.

Referring to FIG. 4A, the display unit 142 shown in FIG. 1 or 212 shown in FIG. 2 displays the map 310 as a spatial information search tool, the search bar 320 as a time information search tool, and the display band 330. A user, who desires to search contents by time information, rotates the selection bar 323 counterclockwise or clockwise. Arranged in the display band 330 are contents corresponding to time information (e.g. 2008.05.01) about the selected group. Additionally, contents corresponding to former time information may be further arranged in the display band 330. For example, if the display band 330 can contain twenty contents, and if a certain group having selected time information has ten contents, the display band 330 may further contain ten contents in another group having former time information (i.e., before 2008.05.01).

Contents contained in the display band 330 are changed in response to a user selecting another group having different time information by using the search bar 320. If the selection bar 323 is rotated clockwise from the first position to the second position 411, the selected time information is changed from '2008.05.01' to '2008.05.10', for example. In addition, a newly selected group 410 is disposed in the enlarged circle, and its time and spatial information is displayed in an outer circle 412 around the enlarged circle. If the newly selected group has also changed spatial information, a region displayed on the map 310 may be changed. However, FIG. 4A shows an example case where the newly selected group 410 has non-changed spatial information (e.g., Univ. E).

Referring to FIG. 4B, in response to rotation of the selection bar 323 from the first position to the second position 411, that is, in response to a change in the selected time information, contents highlighted in the display band 330 may be also changed from the first group of contents 331, 332 and 333 to the second group of contents 431. Here, the second group of contents 431 has time information '2008.05.10' and spatial information 'Univ. E'. Other contents, which have the same time information '2008.05.10' but have some spatial information other than 'Univ. E', may be displayed and not highlighted. The highlighted contents may be distinguished from the non-highlighted contents by their brightness. Alternatively, the highlighted contents may be displayed through their thumbnail images, but the non-highlighted contents may use no thumbnail images.

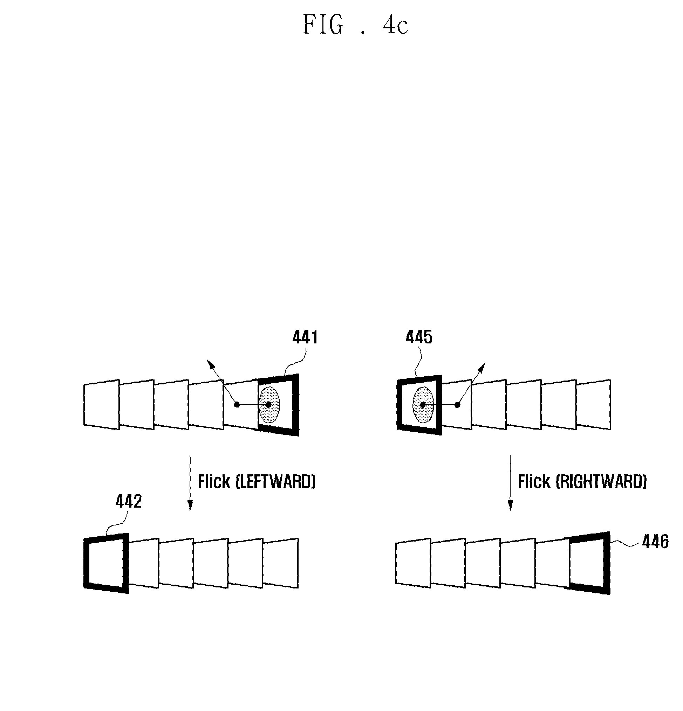

A change in the selection of time information may be made by using directly the display band 330 instead of rotating the selection bar 323. FIG. 4C shows this example.

FIG. 4C is a screen view that illustrates a process of searching contents by using time information in accordance with another exemplary embodiment of the present invention.

Referring to FIG. 4C, if a user touches a certain portion in the display band 330 shown in FIG. 4A and FIG. 4B and then flicks along the display band 330, the selected time information is changed depending on a flick direction. For example, if a user touches a content 441 and then flicks leftward, the touched content is moved to a left position 442. In addition, the currently selected group having specific time information is changed to another group having the latter time information. In other words, if the current group has time information '2008.05.01', a leftward flick event may change the current group to another group having the latter time information '2008.05.10'. Thereby, the display band 330 displays contents belonging to the newly selected group having the latter time information '2008.05.10'. Here, the content 441 touched before a flick event may remain or disappear after being moved to a left position 442.

Additionally, if a user touches a content 445 and then flicks rightward, the touched content is moved to a right position 446. In addition, the currently selected group having specific time information is changed to another group having the former time information. In other words, if the current group has time information '2008.05.10', a rightward flick event may change the current group to other group having the former time information '2008.05.01'. Thereby, the display band 330 displays contents belonging to the newly selected group having the former time information '2008.05.01'. Here, the content 445 touched before a flick event may remain or disappear after being moved to a right position 446.

FIG. 5A and FIG. 5B are screen views that illustrate a process of searching content by using spatial information in accordance with an exemplary embodiment of the present invention.

Referring to FIG. 5A, the display unit 142 shown in FIG. 1 or 212 shown in FIG. 2 displays the map 310 as a spatial information search tool, the search bar 320 as a time information search tool, and the display band 330. A user, who desires to search contents by spatial information, inputs a location movement by touch and drag actions on the map 310 while receiving a visual feedback. A user can therefore change the selection of spatial information and visually check groups including spatial information corresponding to a region on the map 310. Such groups may be displayed in the form of particular marks 311 and 312 on the map 310.

Referring to FIG. 5B, if an input event such as a touch happens on one of the displayed marks 311 and 312, pop-up windows 510 and 520 in which contents are represented may be displayed near the touched mark 312. In other words, contents belonging to the specific group of the touched mark 312 having the selected spatial information are classified according to time information (e.g., '2008.05' and '2008.07') and then separately arranged in different pop-up windows 510 and 520. In an example shown in FIG. 5B, two contents are arranged in the first pop-up window 510 corresponding to time information '2008.05', and three contents are arranged in the second pop-up window 520 corresponding to time information '2008.07'.

Contents displayed in the pop-up windows may include but are not limited to image files, song files, etc. All kinds of contents may be arranged in the pop-up windows if contents have time and spatial information corresponding to any pop-up window. The pop-up windows 510 and 520 may have function buttons 511 and 521 allowing some functions to execute or control contents. If there is a release input, the pop-up windows 510 and 520 disappear.

Spatial information added to contents may be associated with a creation location of contents or an execution location of contents, and may vary according to content types. Additionally, spatial information for contents may be geographical information obtained by the geographical information providing unit 110 shown in FIG. 1 or 230 shown in FIG. 2. Alternatively, spatial information for contents may be an address obtained by mapping geographical information based on mapping data stored in the memory unit. Additionally, spatial information for groups into which contents are classified may be the entire or partial address of the contents belonging to the group.

For example, the address system of Address Number, Address Name, City and State may be used, and an address of a location 'XXX Address A, City B, State C' may be obtained by mapping address data based on geographical information. In this case, spatial information for contents may be 'XXX Address A, City B, State C', and spatial information for groups of contents may be just 'Address A' or 'State C'. Such spatial information for groups may be displayed in the above-discussed outer circle 325 shown in FIG. 3B or 412 shown in FIG. 4A. Alternatively, if a user designates 'Univ. E' for 'Address A', spatial information for groups may be 'Univ. E'.

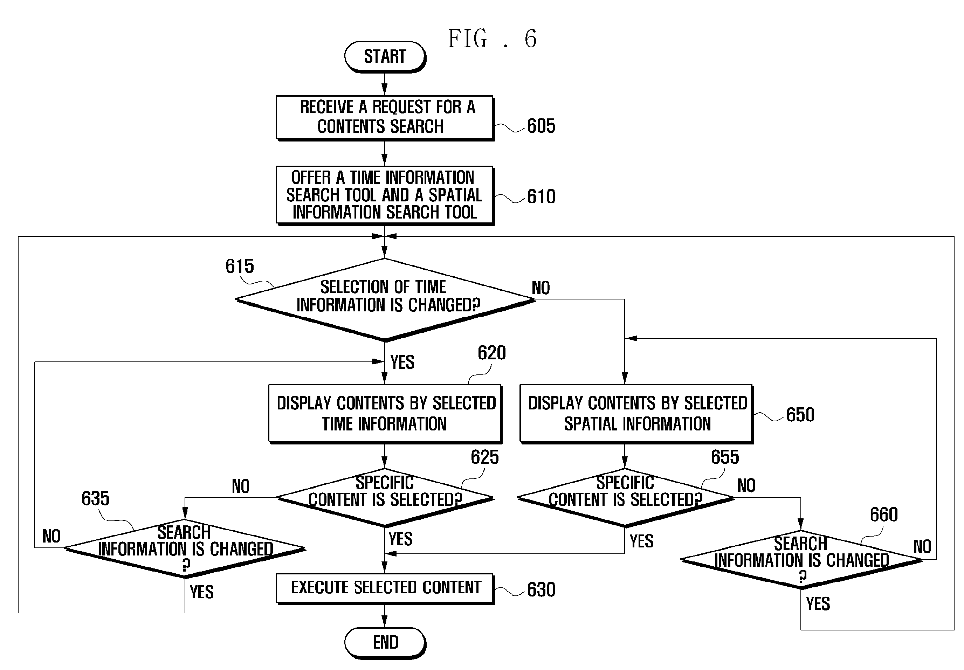

FIG. 6 is a flow diagram that illustrates a process of searching contents by using time information or spatial information in accordance with an exemplary embodiment of the present invention.

Referring to FIG. 6, the control unit 120 shown in FIG. 1 or 220 shown in FIG. 2 receives a request for a contents search in operation 605. Then the control unit 120 or 220 offers the time information search tool and the spatial information search tool to a user in operation 610. Contents include time information and spatial information in their metadata, and are classified into groups according to time information and spatial information. As shown in FIG. 3B, groups have their own time information and spatial information. In addition, if the contents providing devices 261, 262 and 263 are connected to the device 200 as shown in FIG. 2, groups of contents may be reorganized by adding contents stored in the contents providing devices.

In the above operation 605, the control unit 120 or 220 receives a request for a contents search from the input processing unit 144 or 214 in response to a user selecting a 'contents search' item among items in a menu or alternatively presses a specific input key to which a contents search function is allotted.

Time information and spatial information included in metadata of contents may be determined depending on creation time and location of contents. However, if creation information cannot be specified or if necessary, another way of determining time information and spatial information may be used alternatively. For example, if image contents are obtained by a camera (not shown) in the device, creation time and location of image contents may be used as time information and spatial information. Additionally, if multimedia contents such as music files are downloaded from other devices to the device 100 or 200, download time and location may be often meaningless information to a user. In this case, instead of creation time and location, execution time and location may be stored as time information and spatial information in metadata of contents. Furthermore, since contents may be executed several times, such time and spatial information in each of contents may have several values.

As discussed above, the map 310 and the search bar 320 shown in FIG. 3A are examples offered in a visual form to a user as the time information search tool and the spatial information search tool. This is exemplary only, and other tools may be alternatively offered in a visual, tactile or auditory form to a user.

After the time information search tool and the spatial information search tool are offered, the control unit 120 or 220 (especially, the contents management unit 125 or 225) determines whether the selection of time information is changed through the time information search tool in operation 615, namely, whether a group is changed by a new selection of time information. Here, time information (e.g., '2008.05.01') of a newly selected group may be displayed in the outer circle 325 of the search bar 320 shown in FIG. 3B.

If time information is changed by a new selection, the control unit 120 or 220 (especially, the contents management unit 125 or 225) retrieves contents belonging to a group having the newly selected time information and then controls the display unit 142 or 212 to display the retrieved contents in operation 620. For example, contents in a group having time information '2008.05.01' (in some cases, together with other contents in at least one group having former time information) are arranged in the display band 330 as shown in FIG. 3A. Additionally, since the newly selected group has also spatial information 'Univ. E', a region covering the selected spatial information 'Univ. E' is displayed on the map 310 as shown in FIG. 3A. Furthermore, among contents in the display band 330, specific contents having both time information '2008.05.01' and spatial information 'Univ. E' may be highlighted.

Next, the control unit 120 or 220 (especially, the contents management unit 125 or 225) determines whether specific content is selected among the displayed contents in operation 625. If any content is selected, the control unit 120 or 220 (especially, the contents management unit 125 or 225) controls the selected content to be executed in operation 630. If there is no selection for the displayed contents in the above operation 625, the control unit 120 or 220 (especially, the contents management unit 125 or 225) further determines whether search information (namely, time information or spatial information) is changed operation 635. If yes, the process returns to the above operation 615. If no, the process returns to the above operation 620.

If time information is not changed in the above operation 615, that is, if spatial information is changed, the control unit 120 or 220 (especially, the contents management unit 125 or 225) retrieves contents belonging to a group having the newly selected spatial information and then controls the display unit 142 or 212 to display the retrieved contents in operation 650. As shown in FIG. 3A, the map 310 is offered to a user as a spatial information search tool. Contents groups that belong to a region in the map 310 are displayed in a form of particular marks on the map 310. A user can move a region displayed on the map 310 by touch and drag actions, and thereby corresponding groups of contents may be changed on the map 310. If a certain group is selected, namely, if a certain mark is touched, contents belonging to the selected group are displayed through pop-up windows as shown in FIG. 5B.

Next, the control unit 120 or 220 (especially, the contents management unit 125 or 225) determines whether specific content is selected among the displayed contents in operation 655. If any content is selected, the control unit 120 or 220 (especially, the contents management unit 125 or 225) controls the selected content to be executed in the above-mentioned operation 630. If there is no selection for the displayed contents in the above operation 655, the control unit 120 or 220 (especially, the contents management unit 125 or 225) further determines whether search information (namely, time information or spatial information) is changed in operation 660. If yes, the process returns to the above operation 615. If no, the process returns to the above operation 650.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A method for searching contents in an electronic device, the method comprising:
offering a time information search tool and a spatial information search tool in response to receipt of a request for a contents search;
receiving input of search information comprising at least one of time information and spatial information through either or both of the time information search tool and the spatial information search tool; and
searching for at least one content comprising the search information among a plurality of contents stored in the device.

2. The method of claim 1, further comprising:
classifying the plurality of contents into first groups, each of which is composed of contents having the same time information; and
classifying the plurality of contents into second groups, each of which is composed of contents having the same spatial information.

3. The method of claim 2, wherein the searching for at least one content comprises searching for a group among the first groups and the second groups, the searched-for group being composed of contents having the search information.

4. The method of claim 3, further comprising:
displaying first contents in a first display format, the first contents belonging to the first group composed of contents having the same time information as the search information; and
displaying second contents in a second display format, the second contents belonging to the second group composed of contents having the same spatial information as the search information.

5. The method of claim 4, further comprising:
highlighting third contents that are displayed as the first contents in the first display format where the third contents also belong to the second group.

6. The method of claim 2, wherein each of the first groups and the second groups has time information and spatial information.

7. The method of claim 1, wherein the offering of the time information search tool comprises displaying a search tool that has a time selection tool.

8. The method of claim 1, wherein the offering of the spatial information search tool comprises displaying a map.

9. The method of claim 4, wherein the displaying of the second contents comprises displaying the second group as a mark and displaying at least one pop-up window comprising the second contents in response to selection of the mark.

10. The method of claim 2, wherein the time information of the contents comprises creation or execution time of the contents.

11. The method of claim 2, wherein the spatial information of the contents comprises creation or execution location of the contents.

12. The method of claim 1, further comprising:
classifying, in response to at least one contents providing device being connected to the device, at least one content stored in the contents providing device and the plurality of contents into first groups, each of which is composed of contents having the same time information; and
classifying at least one content stored in the contents providing device and the plurality of contents into second groups, each of which is composed of contents having the same spatial information.

13. An electronic device for contents search, the device comprising:
a memory unit configured to store a plurality of contents having spatial information and time information as search information, and to further store groups into which the plurality of contents are classified by the spatial information or the time information;
a display unit configured to display a time information search tool and a spatial information search tool in response to receipt of a request for a contents search, and to further display the contents belonging to a searched group;
an input unit configured to receive an input of search information comprising at least one of time information and spatial information through either or both of the time information search tool and the spatial information search tool; and
a control unit configured to search a group including the selected search information.

14. The device of claim 13, further comprising:
a geographical information providing unit configured to provide geographical information about the contents.

15. The device of claim 13, further comprising:
an interface unit configured to determine whether at least one contents providing device is connected, the contents providing device storing at least one content having spatial information and time information,
wherein the control unit is further configured to classify at least one content stored in the contents providing device and the plurality of contents into groups according to the spatial information or the time information.
